# EUROPEAN PATENT SPECIFICATION

(11) **EP 0 868 637 B1**
(45) Date of publication and mention of the grant of the patent: **14.06.2000**
(21) Application number: 96943881.1
(22) Date of filing: 17.12.1996
(51) Int. Cl.: F24J 2/42, F24D 11/00, F24D 19/10

(54) **SOLAR HEAT PLANT**
SONNENWÄRMEANLAGE
INSTALLATION DE CHAUFFAGE PAR MOYEN D'ENERGIE SOLAIRE

(30) Priority: 22.12.1995 DK 147395
(43) Date of publication of application: 07.10.1998
(73) Proprietor: Nordisk VVS Teknik Aps, 3400 Hillerod (DK)
(72) Inventor: KNUDSEN, Jorgen, Eghoj, DK-3400 Hillerod (DK)
(74) Representative: Holme, Edvard
(86) International application number: DK9600539
(87) International publication number: WO9723758

(56) References cited:
- EP-A- 0 433 869
- DE-A- 2 614 622
- DE-A- 2 744 618
- DE-A- 4 336 756
- GB-A- 2 153 504
- PATENT ABSTRACTS OF JAPAN, Vol. 9, No. 245, M-418; & JP,A,60 096 862 (MATSUSHITA DENKI SANGYO K.K.), 30 May 1985.

## Description

The invention relates to a solar heat plant for heating utility water, and comprises a solar collector for the collecting of incident radiant solar energy; an accumulator for accumulation of the received energy; a first liquid cycle for the circulation of a heat carrying liquid between the solar collector where the liquid absorbs the solar energy in the form of heat, and the accumulator where the liquid gives off heat; and a second liquid cycle for leading utility water for heating to the accumulator and hot utility water from this to the place of use, whereby the accumulator consists of a container which is filled with the heat carrying liquid and has been inserted into the first liquid cycle, and that the plant furthermore comprises a heat exchanger, and a third liquid cycle for the circulation of the heat carrying liquid between the accumulator and one of the sides of the heat exchanger, while the other side is inserted in the second liquid cycle.

By means of such solar plants the incident solar radiation can be utilized with an investment which this permanent and free source of energy is able to pay back over a few years. Since the plants furthermore operate without polluting of the milieu, it has become popular to use solar energy for heating water, which for example circulates in a central- heating plant, or which e.g. is used in a bathroom or is consumed. In all cases the water, which is to heated, will in the following be called utility water.

The intensity of the incident solar radiation is very varying. Therefore, there is normally inserted a heating accumulator in the plants for equalizing the heat production, which is varying in proportion to the intensity of the incident solar radiation. In conventional plants there is as accumulator normally used a water container of a suitable size. This container can e.g. be the same, as the one used for keeping a supply of hot water in house installations.

This solution is in all respects an excellent solution, but suffers from the draw back, that there gradually can emerge bacteria growth in the hot water being in container. This is unhygienic and can particularly be injurious to health, when the water is used for personal hygiene or is to be consumed.

From the patent publication JP-A-60096862 is known an air condition and water supplying apparatus utilizing solar heat. The apparatus has a low-heated water cooling and heating unit and a surge tank which is divided into two parts by a bulkhead. Water is circulated through the tank and a solar heat collector and at the same time also through the tank and the cooling and heating unit. The arrangement prevents the water from the two circuits to be mixed in the tank such that the apparatus obtains a high thermal efficiency and a high degree controllability for fluctuation in output caused by the change in solar radiation. The patent are not teaching the utility water to be circulated through the low-heated water cooling and heating unit and the heated water leaving said unit will of necessary have a temperature which depend on the consume of heated water and on the intensity of the solar radiation. Such, the temperature of this heated water sometimes could be relatively low and sometimes relatively high. Usually it is, however, a wish, that hot utility water reaches the consumption place with a predetermined temperature.

The object of the invention is to provide a solar heat plant of the kind mentioned in the opening paragraph in such a way that the bacteria growth in the utility water can be avoided and that heated utility water from the plant can be delivered with a predetermined temperature.

This is, according to the invention, obtained by the fact that there in the second conduit of the third cycle is inserted a pilot valve, and in the second cycle is placed a sensor to register the temperature of the utility water after the heat exchanger, and that the pilot valve is adapted to regulate the liquid stream in the third cycle in dependence of signals from the sensor. This means that the hot utility water reaches the consumption place with a predetermined temperature.

Since the utility water avoids getting in contact with the liquid in the container and is, consequently, not any longer exposed to be infected with the bacteria cultures, which emerge in the container. With an adequate choice of a heat carrying liquid there may be a possibility of total elimination of bacteria growth at all in the accumulator. As a liquid, glycerine can, for example, be used.

The capacity of the plant is increased inversely proportional to the temperature of the heat carrying liquid at the inlet of the solar collector. It is consequently an advantage, when this temperature is as low as possible. The temperature will remain at the lowest when the liquid which reaches the solar collector, will be taken from an lower area in the container, since the liquid in the accumulator container naturally will separate into layers with the highest temperature at the top and the lowest at the bottom. The liquid from the solar collector will then be send into the container at the top, where the temperature already is at the highest.

The effect mentioned above will furthermore be improved when the heat carrying liquid in the third cycle reaches the heat exchanger from the upper area of the accumulator container, and the liquid, which has been cooled off during the passage of the heat exchanger, reaches the container at the bottom.

It will in this connection furthermore be expedient to use a plate heat exchanger, which with a limited space requirement has a large capacity, and which therefore will be able to cool down the heat carrying liquid to almost the same temperature as the cold utility water before the heat exchanger.

As mentioned before, the intensity of the incident solar radiation varies very much, and the temperature of the heat carrying liquid in the accumulator container will consequently vary to some extend. In periods with a lot of sun it will increase and in periods with little or no sun, it will decrease. When the temperature increases, the liquid will expand, and to avoid that it in this process will make the container burst or make other parts of the first cycle burst, this cycle can be connected to an expansion container. This can by an expedient embodiment furthermore be installed at the top area of the container, which area has to be so big that it will not totally be filled with liquid, even if it will find itself in the hottest condition as can be imagined.

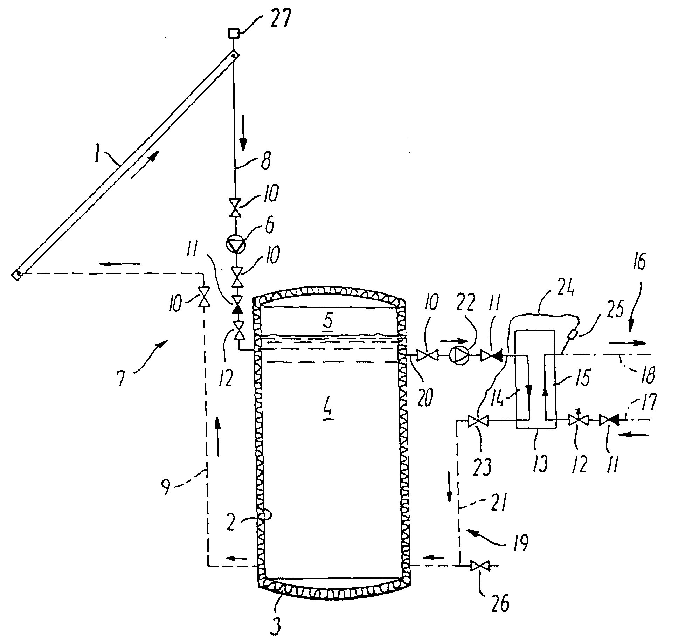

The invention will be explained more fully by the following description where further expedient qualities and effects are stated and the embodiment serves just as an example, with reference to the only figure of the drawing, which schematically shows a solar heat plant according to the invention.

In the figure a solar collector, which e.g. can be placed on the roof of a house (not shown), is designated with the reference number 1. The solar energy can e.g. serve for completely or partly heating of the house or for heating the utility water, which is used for personal hygiene or for other purposes in the house. In the following it is assumed that it is utility water of this kind which is to be heated.

The solar collector does in itself not make any part of the invention, and will consequently not be mentioned more detailed here. It is, however, important that the solar collector is of that type which in form of heat is transmitting the incident solar radiation to a heat carrying liquid which flows through the solar collector when the plant is operating.

With the reference number 2 there is designated an accumulator container, which is surrounded by a heating insulation 3. The container is partly filled with heat carrying liquid 4, and above this liquid an area 5 is kept free. This area reacts as an expansion container 5 for absorbing that extra volume, which the liquid 4 takes up when it expands at increasing temperature.

The liquid is circulating by means of a pump 6 in the first cycle, which as a whole is designated with the reference number 7. This cycle comprises more exactly the solar collector 1 and the container 2, and also a first liquid conduit 8, which takes heated liquid from the solar collector to the container, and a second liquid conduit 9, which takes the cooled off liquid from the container to the solar collector.

The pump 6 is placed in the first conduit 8, and on both sides of the pump there is placed a shut-off valve 10 for closing the cycle, when the pump is to be demounted for inspection or replacement. In the conduit 8 is furthermore a counter valve 11 and a safety valve 12. In the second conduit 9 there is furthermore another shut-off valve 10 for the purpose, together with the one or both shut-off valves, of shutting the cycle below the solar collector, when this is to be inspected or perhaps be replaced.

The solar heat plant comprises also a heat exchanger 13 which, for example, can be a plate heat exchanger 13. The heat exchanger has a first side 14 and a second side 15.

The utility water is running in another cycle 16, which only can be seen in fragments in the figure. This cycle 16 comprises a first water conduit 17 and a second water conduit 18, both of which are connected to the second side 15 of the heat exchanger 13. In the first water conduit 17 there is placed a counter valve 11 and a safety valve 12.

For the circulation between the container 2 and the heat exchanger 13 a third cycle 19 is made. This cycle 19 comprises a first water conduit 20 and a second water conduit 21, both of which are connected to the first side 14 of the heat exchanger 13. In the first conduit 20 is placed a pump 22 to circulate the liquid between the container and the heat exchanger. Furthermore, there is in this conduit placed a shut-off valve 10 and a counter valve 11. In the second conduit 21 of the third cycle 19 there is placed a pilot valve 23, which via a pilot conduit 24 is communicating with a sensor 25, which is placed in the second conduit 18 of the second cycle 16. The purpose of this arrangement will be explained in details in the following.

The plant is filled up with the heat carrying liquid through a filling valve 26 which is connected to the second conduit 21 of the third cycle 19. The plant is vented by means of an automatic air escape valve 27, which is placed at the top of the plant above the solar collector 1.

When the solar collector is operating, the shut-off valves 10 in the first cycle 7 have to be open, and the pump 6 has to be activated. The heat carrying liquid 4 is then flowing, in the direction of the arrow, through the solar collector 1, where the heat carrying liquid is heated by the incident solar radiation. The heated liquid is then flowing via the first conduit 8 into the container 2 at the top, which container then will store a supply of hot liquid. The liquid will, by natural reasons, be laminated in the container with the hottest liquid at the top and the coldest at the bottom. The second conduit 9 of the first cycle 7 is connected to the container 2 at the bottom, and therefore the coldest part of the liquid will be in the container 2, which via the second conduit 9 is returned to the solar collector 1 in order to be heated again. The solar collector obtains advantageously a maximum of capacity by heating the liquid from its coldest possible condition, since the temperature differences determining the capacity thereby will be largest.

The liquid supply in the container 2, which e.g. can be of some hundreds of litres, has a large heat capacity and will therefore be able to accumulate a lot of heat. This is a useful quality, since the intensity of the incident solar radiation and thereby the heat production of the solar collector is varying very much. When there is a lot of sun, the liquid 4 will accumulate the surplus heat in the container 2, which heat thereafter will be available in periods with little or no sun.

The same function has those hot-water tanks which are used in the conventional solar heat plants. In these cases, the water in the hot-water tank is, however, used directly as utility water. This is unhygienic and can be injurious to the health, since the inner of the hot-water tank notoriously can be a hotbed for bacterial cultures, which therefore exist in the utility water and can hurt the people who use the water for e.g. personal hygiene or consumption. This drawback is completely eliminated by means of the solar heat plant according to the invention, where the utility water is kept separated from the heat accumulation liquid in the container 2. As liquid can e.g. glycerine be used, which does not freeze, even at high degrees of cold.

The utility water is now heated in the second cycle 16 by flowing through the second side 15 of the heat exchanger 13 in the direction of the arrow since hot liquid 4 from the container 2 via the third cycle 19, in a counterflow, is brought to flow through the first side 14 of the heat exchanger 13 in the direction of the arrow. In the heat exchanger 13 the heat is then transferred from the liquid to the water, which then as hot utility water is led out to the consumption place (not shown) via the second conduit 18. The cold water is transferred to the heat exchanger via the first conduit 17 from, for example, a municipal water supply plant (not shown).

As shown, the first conduit 20 of the third cycle 19 is connected to the container 2 at the top and the second conduit 21 at the bottom. This imply the advantage, that it is the hottest liquid, which is coming into the heat exchanger, the capacity of which therefore is utilized at its maximum, since the difference in temperature between the liquid and the hot water, which in counterflow is flowing through the heat exchanger, thereby will be the largest possible. A second advantage is that the coldest liquid 4, which from the heat exchanger is led into the container 2 at its bottom where the coldest liquid in the container 2 already is. Thereby the expedient effect is increased to the effect of supplying the solar collector 1 with the liquid 4 via the second conduit 9 of the first cycle 7 in the coldest possible condition and thereby be able to utilize the capacity of the solar collector at the optimum.

## Claims

1. A solar heat plant for heating utility water, and comprising a solar collector (1) for the collecting of radiated solar energy; an accumulator (2) for accumulation of the received energy; a first liquid cycle (7) for the circulation of a heat carrying liquid (4) between the solar collector (1) where the liquid absorbs the solar energy in the form of heat, and the accumulator (2) where the liquid gives off heat; and a second liquid cycle (16) for transferring the utility water for heating to the accumulator (2) and hot utility water from this to the place of use, whereby the accumulator (2) consists of a container (2) which is filled with the heat carrying liquid (4) and has been inserted into the first liquid cycle (7), and that the plant furthermore comprises a heat exchanger (13), and a third liquid cycle (19) for the circulation of the heat carrying liquid between the accumulator (2) and one of the sides (14) of the heat exchanger (13), while the other side (15) is inserted in the second liquid cycle (16), **characterized** in, that there in a second conduit (21) of the third cycle (19) is inserted a pilot valve (23), and in the second cycle (16) is placed a sensor (25) to register the temperature of the utility water after the heat exchanger (13), and that the pilot valve (23) is adapted to regulate the liquid stream in the third cycle (19) in dependence of signals from the sensor (25).

2. A solar heat plant according to claim 1, **characterized** in that the first cycle (7) comprises a first liquid conduit (20) to lead the liquid from the solar collector (1) to the accumulator (2), and a second liquid conduit (21) to lead the liquid from the accumulator (2) to the solar collector (1), whereby the first conduit is connected to the upper part of the container and the second conduit to the lower part of the container.

3. A solar heat plant according to claim 1 or 2, **characterized** in that the third cycle (19) comprises a first liquid conduit (20) to lead the liquid from the accumulator (2) to the heat exchanger (13) and a second liquid conduit (21) to lead the liquid from the heat exchanger (13) to the accumulator (2), whereby the first conduit (20) is connected to the upper part of the container and the second conduit to the lower part of the container.

4. A solar heat plant according to each of the claims 1 - 3, **characterized** in that it comprises an expansion container (2) for the heat carrying liquid, and -that this expansion container is connected to the first cycle.

5. A solar heat plant according to claim 4, **characterized** in that the expansion container (2) consists of an upper section of the accumulator.

6. A solar heat plant according to each of the claims 1 - 5, **characterized** in that there in the first cycle is inserted a pump (22) for the circulation of the heat carrying liquid.

7. A solar heat plant according to each of the claims 1 - 6, **characterized** in that the heat exchanger (13) is a plate heat exchanger.

8. A solar heat plant according to each of the claims 1 - 7, **characterized** in that the heat carrying liquid is glycerine.

9. A solar heat plant according to each of the claims 1 - 8, **characterized** in that the accumulator container (2) is heat insulated.

## Patentansprüche

1. Sonnenwärmeanlage zum Aufheizen von Brauchwasser mit einem Solarkollektor (1) zum Auffangen der abgestrahlten Sonnenenergie, einem Speicher (2) zum Speichern der aufgenommenen Energie, einem ersten Flüssigkeitszyklus (7) zum Zirkulieren einer wärmeführenden Flüssigkeit (4) zwischen dem Solarkollektor (1), in dem die Flüssigkeit die Sonnenenergie in Form von Wärme absorbiert, und dem Speicher (2), in dem die Flüssigkeit Wärme abgibt, und einem zweiten Flüssigkeitszyklus (16) zum Übertragen des Brauchwassers zum Aufheizen an den Speicher (2) und des heißen Brauchwassers von dort zum Ort des Gebrauchs, wobei der Speicher (2) aus einem Behälter (2) besteht, der mit einer wärme führenden Flüssigkeit (4) gefüllt und in den ersten Flüssigkeitszyklus (7) integriert ist, und wobei die Anlage ferner einen Wärmetauscher (13) und einen dritten Flüssigkeitszyklus (19) zum Zirkulieren der wärmeführenden Flüssigkeit zwischen dem Speicher (2) und einer der Seiten (14) des Wärmetauschers (13) umfaßt, wobei die andere Seite (15) in den zweiten Flüssigkeitszyklus (16) integriert ist,
dadurch gekennzeichnet, daß in eine zweiten Leitung (21) des dritten Zyklus (19) ein Führungsventil (23) integriert und im zweiten Zyklus (16) ein Sensor (25) angeordnet ist, um die Temperatur des Brauchwassers nach dem Wärmetauscher (13) zu ermitteln, wobei das Führungsventil (23) dafür ausgelegt ist, den Flüssigkeitsstrom im dritten Zyklus (19) in Abhängigkeit von den Signalen des Sensors (25) zu regeln.

2. Sonnenwärmeanlage nach Anspruch 1,
dadurch gekennzeichnet, daß der erste Zyklus (7) eine erste Flüssigkeitsleitung (20), um die Flüssigkeit vom Solarkollektor (1) zum Speicher (2) zu leiten, und eine zweite Flüssigkeitsleitung (21) umfaßt, um die Flüssigkeit vom Speicher (2) zum Solarkollektor (1) zu leiten, wobei die erste Leitung mit dem oberen Teil des Behälters und die zweite Leitung mit dem unteren Teil des Behälters verbunden ist.

3. Sonnenwärmeanlage nach Anspruch 1 oder 2,
dadurch gekennzeichnet, daß der dritte Zyklus (19) eine erste Flüssigkeitsleitung (20), um die Flüssigkeit vom Speicher (2) zum Wärmetauscher (13) zu leiten, und eine zweite Flüssigkeitsleitung (21) umfaßt, um die Flüssigkeit vom Wärmetauscher (13) zum Speicher (2) zu leiten, wobei die erste Leitung (20) mit dem oberen Teil des Behälters und die zweite Leitung mit dem unteren Teil des Behälters verbunden ist.

4. Sonnenwärmeanlage nach einem der Ansprüche 1 bis 3,
dadurch gekennzeichnet, daß die Anlage einen Expansionsbehälter (2) für die wärmeführende Flüssigkeit aufweist, und daß dieser Expansionsbehälter mit dem ersten Zyklus verbunden ist.

5. Sonnenwärmeanlage nach Anspruch 4,
dadurch gekennzeichnet, daß der Expansionsbehälter (2) aus einem oberen Abschnitt des Speichers besteht.

6. sonnenwärmeanlage nach einem der Ansprüche 1 bis 5,
dadurch gekennzeichnet, daß in den ersten Zyklus eine Pumpe (22) zum Zirkulieren der wärmeführenden Flüssigkeit integriert ist.

7. Sonnenwärmeanlage nach einem der Ansprüche 1 bis 6,
dadurch gekennzeichnet, daß der Wärmetauscher (13) ein Plattenwärmetauscher ist.

8. Sonnenwärmeanlage nach einem der Ansprüche 1 bis 7,
dadurch gekennzeichnet, daß die wärmeführende Flüssigkeit Glyzerin ist.

9. Sonnenwärmeanlage nach einem der Ansprüche 1 bis 8,
dadurch gekennzeichnet, daß der Speicherbehälter (2) wärmeisoliert ist.

## Revendications

1. Installation de chauffage solaire pour le chauffage d'eau sanitaire, comprenant un collecteur solaire (1) pour la captation de l'énergie solaire rayonnée ; un accumulateur (2) pour l'accumulation de l'énergie reçue ; un premier cycle à liquide (7) pour la circulation d'un liquide caloporteur (4) entre le collecteur solaire (1) dans lequel le liquide absorbe l'énergie solaire sous forme de chaleur, et l'accumulateur (2) où le liquide restitue de la chaleur ; et un deuxième cycle liquide (16) pour le transfert de l'eau sanitaire à chauffer vers l'accumulateur (2) et de l'eau chaude sanitaire de celui-ci au lieu d'utilisation, dans lequel l'accumulateur (2) comprend un récipient (2) rempli du liquide caloporteur (4) et a été inséré dans le premier cycle liquide (7), l'installation comportant de plus un échangeur de chaleur (13), et un troisième cycle liquide (19) pour la circulation du liquide caloporteur entre l'accumulateur (2) et l'un des côtés (14) de l'échangeur de chaleur (13), alors que l'autre côté (15) est inséré dans le deuxième cycle liquide (16), caractérisée en ce que dans une deuxième conduite (21) du troisième cycle (19) est insérée une vanne de pilotage (23), et dans le deuxième cycle (16) est placé un capteur (25) pour enregistrer la température de l'eau sanitaire à la sortie de l'échangeur de chaleur (13), et en ce que la vanne de pilotage (23) est adaptée à la régulation du débit de liquide dans le troisième cycle (19) en fonction des signaux issus du capteur (5).

2. Installation de chauffage solaire selon la revendication 1, caractérisée en ce que le premier cycle (7) comprend une première conduite de liquide (20) pour amener le liquide du collecteur solaire (1) vers l'accumulateur (2), et une deuxième conduite de liquide (21) pour amener le liquide de l'accumulateur (2) vers le collecteur solaire (1), dans laquelle la première conduite est connectée à la partie supérieure du récipient et la deuxième conduite est connectée à la partie inférieure du récipient.

3. Installation de chauffage -solaire selon la revendication 1 ou 2, caractérisée en ce que le troisième cycle (19) comporte une première conduite de liquide (20) pour amener ledit liquide de l'accumulateur (2) vers l'échangeur de chaleur (13) et une deuxième conduite de liquide (21) pour amener le liquide de l'échangeur de chaleur (13) à l'accumulateur (2), dans laquelle la première conduite (20) est connectée à la partie supérieure du récipient et la deuxième conduite à la partie inférieure du récipient.

4. Installation de chauffage solaire selon l'une quelconque des revendications 1-3, caractérisée en ce qu'elle comporte un vase d'expansion (2) pour le liquide caloporteur, et en ce que ce vase d'expansion est connecté au premier cycle.

5. Installation de chauffage solaire selon la revendication 4, caractérisée en ce que le vase d'expansion (2) est constitué par la partie supérieure de l'accumulateur.

6. Installation de chauffage solaire selon l'une quelconque des revendications 1-5, caractérisée en ce que dans le premier cycle est insérée une pompe (22) pour la circulation du liquide caloporteur.

7. Installation de chauffage solaire selon l'une quelconque des revendications 1-6, caractérisée en ce que l'échangeur de chaleur (13) est un échangeur de chaleur à plaques.

8. Installation de chauffage solaire selon l'une quelconque des revendications 1-7, caractérisée en ce que le liquide caloporteur est de la glycérine.

9. Installation de chauffage solaire selon l'une quelconque des revendications 1-8, caractérisée en ce que le récipient accumulateur (2) est isolé thermiquement.
